# EUROPEAN PATENT APPLICATION

(11) **EP 4 369 450 A2**
(43) Date of publication of application: **15.05.2024**
(21) Application number: 23201845.7
(22) Date of filing: 05.10.2023
(51) Int. Cl.: H01M 10/052, H01M 50/417, H01M 50/42, H01M 50/423, H01M 50/426, H01M 50/434, H01M 50/443, H01M 50/446, H01M 50/451, H01M 50/457

(54) **SEPARATOR FOR RECHARGEABLE LITHIUM BATTERY AND RECHARGEABLE LITHIUM BATTERY INCLUDING THE SAME**

(30) Priority: 10.11.2022 KR 20220149821
(71) Applicant: Samsung SDI Co., Ltd., Yongin-si, Gyeonggi-do 17084 (KR)
(72) Inventor: Kim, Hana, 17084, Giheung-gu, Yongin-si, Gyeonggi-do (KR); Kim, Soohee, 17084 Giheung-gu, Yongin-si, Gyeonggi-do (KR); Kim, Byung-Soo, 17084 Giheung-gu, Yongin-si, Gyeonggi-do (KR); Lee, Yeonho, 17084 Giheung-gu, Yongin-si, Gyeonggi-do (KR)
(74) Representative: Gulde & Partner

(57) **Abstract**

A separator for a rechargeable lithium battery and a rechargeable lithium battery including the same are disclosed. In an embodiment, provided is a separator for a rechargeable lithium battery including a heat resistant layer and an adhesive layer which are sequentially formed on at least one surface of a substrate, wherein the heat resistant layer includes a ceramic, the adhesive layer includes an adhesive binder and an organic filler, and the adhesive binder includes a polymer having an interpenetrating polymer network (IPN) structure.

## Description

### BACKGROUND OF THE INVENTION

### (a) Field of the Invention

A separator for a rechargeable lithium battery and a rechargeable lithium battery including the same are disclosed.

### (b) Description of the Related Art

Recently, rechargeable batteries have drawn attentions as an energy source. Among them, a rechargeable lithium battery having high energy density and discharge voltage has already been commercially available and widely used, but efforts to improve their performance are continuously being made.

A separator, which is an element constituting the rechargeable lithium battery, enables charging and discharging the rechargeable lithium battery by continuously maintaining ionic conductivity, while separating positive and negative electrodes each other.

In order to stably operate the rechargeable lithium battery, it is important to secure excellent thermal stability, structural stability, adhesive strength, air permeability, etc. of the separator.

### SUMMARY OF THE INVENTION

The invention is defined by the appended claims. The description that follows is subjected to this limitation. Any disclosure lying outside the scope of said claims is only intended for illustrative as well as comparative purposes.

A separator for a rechargeable lithium battery having excellent thermal stability, structural stability, adhesion, air permeability, and the like is provided.

In an embodiment, a separator for a rechargeable lithium battery includes a heat resistant layer and an adhesive layer which are sequentially formed on at least one surface of a substrate, wherein the heat resistant layer includes a ceramic, the adhesive layer includes an adhesive binder and an organic filler, and the adhesive binder includes a polymer having an interpenetrating polymer network (IPN) structure.

Another embodiment provides a rechargeable lithium battery including the separator for a rechargeable lithium battery.

The separator for a rechargeable lithium battery according to an embodiment exhibits excellent thermal stability, structural stability, adhesion, air permeability, etc., and contributes to the stable operation of a rechargeable lithium battery.

### BRIEF DESCRIPTION OF THE DRAWINGS

FIGS. 1 to 3 are views schematically illustrating a separator for a rechargeable lithium battery according to embodiments, respectively.

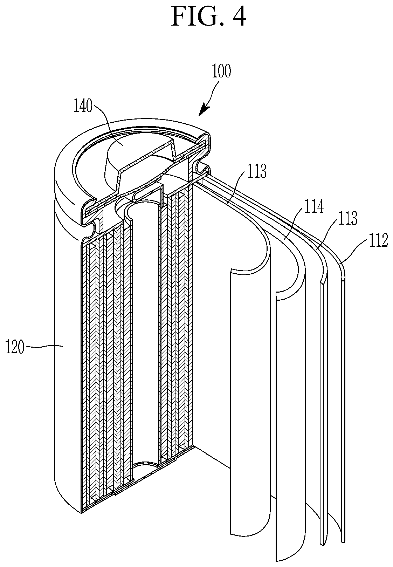

FIG. 4 is an exploded perspective view of a rechargeable lithium battery according to an embodiment.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

"Combination thereof" means a mixture, laminate, composite, copolymer, alloy, blend, reaction product, and the like of the constituents.

It should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

"Particle diameter" or "average particle diameter" may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution. For example, the average particle diameter (D50) of the particles may be measured by laser diffraction (LD). The method may be performed according to ISO 13320:2020. According to the IUPAC definition, the equivalent diameter of a non-spherical particle is equal to a diameter of a spherical particle that exhibits identical properties to that of the investigated non-spherical particle.

"Thickness" may be measured through a thickness measuring device or a photograph taken with an optical microscope such as a scanning electron microscope.

### (Separator for Rechargeable Lithium Battery)

A separator for a rechargeable lithium battery includes a heat resistant layer and an adhesive layer which are (in this order) sequentially formed on at least one surface of a substrate, wherein the heat resistant layer includes a ceramic, the adhesive layer includes an adhesive binder and an organic filler, and the adhesive binder includes a polymer having an interpenetrating polymer network (IPN) structure.

The separator for a rechargeable lithium battery according to an embodiment can simultaneously exhibit excellent adhesive strength and air permeability through the adhesive layer while securing thermal stability and structural stability through the heat resistant layer.

For example, the heat resistant layer includes a ceramic, and the ceramic corresponds to a material having excellent heat resistance and durability. Thus, the separator for a rechargeable lithium battery according to an embodiment can secure thermal stability and structural stability through the heat resistant layer.

In addition, the adhesive layer includes an adhesive binder and an organic filler. In particular, the adhesive binder includes a polymer having an interpenetrating polymer network (IPN) structure, wherein the polymer of the interpenetrating polymer network structure means that two types of polymers are entangled in a network form, and at least one polymer has a network structure. In other words, an interpenetrating polymer network (IPN) is a polymer comprising two or more networks which are at least partially interlaced on a molecular scale but not covalently bonded to each other and cannot be separated unless chemical bonds are broken (IUPAC). Hence, the adhesive binder is a polymer comprising two or more networks, which can be envisioned to be entangled in such a way that they are concatenated and cannot be pulled apart, but not bonded to each other by any chemical bond. Accordingly, the polymer having the interpenetrating polymer network structure may enhance adhesive strength through a heat press process, in comparison to an adhesive binder of a non-IPN structure such as a linear polymer. In addition, the organic filler is a material having a high melting temperature (Tm), and shapes of the particles is maintained even after the heat press process, thereby contributing to securing air permeability after heat press of the separator. Accordingly, the separator for a rechargeable lithium battery according to an embodiment may simultaneously exhibit excellent adhesive strength and air permeability through the adhesive layer.

Hereinafter, the separator for a rechargeable lithium battery of an embodiment will be described in detail.

### Adhesive Binder

The adhesive binder may be one in which an acrylate-based crosslinked polymer and a vinylidene fluoride-based crosslinked polymer form an interpenetrating polymer network. The two crosslinked polymers forming the interpenetrating polymer network may impart excellent adhesive strength to the separator for a rechargeable lithium battery according to an embodiment.

For example, the acrylate-based crosslinked polymer and the vinylidene fluoride-based crosslinked polymer each have a network structure, and they may be entangled in a network form.

The acrylate-based crosslinked polymer may be a crosslinked polymer selected from polymethacrylate, polyethylacrylate, polypropylacrylate, and polybutylacrylate.

The vinylidene fluoride-based crosslinked polymer may be a crosslinked polymer selected from a homopolymer including a structural unit derived from a vinylidene fluoride monomer alone and a copolymer of a structural unit derived from vinylidene fluoride and a structural unit derived from other monomers.

The copolymer may include a vinylidene fluoride-derived structural unit and at least one of structural units derived from chlorotrifluoroethylene, trifluoroethylene, hexafluoropropylene, ethylene tetrafluoride, and ethylene monomers, but it is not limited thereto. For example, the copolymer may be a polyvinylidene fluoride-hexafluoropropylene (PVdF-HFP) copolymer including a structural unit derived from a vinylidene fluoride monomer and a structural unit derived from a hexafluoropropylene monomer.

A weight ratio of the acrylate-based crosslinked polymer and the vinylidene fluoride-based crosslinked polymer in the adhesive binder may be 8:2 to 1:9. Within the above range, excellent adhesive strength may be maintained even after heat press of the separator for a rechargeable lithium battery according to an embodiment.

For example, as a content of the acrylate-based crosslinked polymer relatively increases within the above range, an internal resistance of the battery may increase, and as the content of the acrylate-based crosslinked polymer relatively decreases, an adhesion function of the adhesive binder including the material may be deteriorated. Considering this trade-off relationship, a weight ratio of the acrylate-based crosslinked polymer and the vinylidene fluoride-based crosslinked polymer may be adjusted.

For example, the weight ratio of the acrylate-based crosslinked polymer and the vinylidene fluoride-based crosslinked polymer in the adhesive binder may be 8:2 to 1:9, 7:3 to 2:8, or 6:4 to 2:8, or 5:5 to 3:7.

The adhesive binder may have a weight average molecular weight of greater than or equal to 100,000 g/mol. Within the above range, excellent adhesive strength may be maintained even after heat press of the separator for a rechargeable lithium battery according to an embodiment.

For example, as the weight average molecular weight of the adhesive binder decreases within the above range, it may be electrochemically unstable. Considering this relationship, the weight average molecular weight of the adhesive binder may be adjusted. For example, the weight average molecular weight of the adhesive binder may be greater than or equal to 100,000 g/mol, greater than or equal to 200,000 g/mol, or greater than or equal to 300,000 g/mol.

Even if the weight average molecular weight of the adhesive binder increases, physical properties are not deteriorated, and thus the upper limit is not limited thereto, but it may be less than or equal to 1,500,000 g/mol, which is the upper limit of the weight average molecular weight of commercially available adhesive binders.

Here, the weight average molecular weight may be an average molecular weight in terms of polystyrene measured using gel permeation chromatography.

### Organic Filler

The organic filler may be a particle-type filler including a vinylidene fluoride-based polymer.

The organic filler is a material with a high melting point (Tm) of 100 to 200 °C, and the shape of the particles may be maintained even after the heat press process, thereby contributing to securing air permeability after heat press of the separator.

For example, the organic filler may have a melting point of greater than or equal to 100 °C, greater than or equal to 120 °C, or greater than or equal to 130 °C, and less than or equal to 200 °C, less than or equal to 180 °C, or less than or equal to 170 °C.

The organic filler is a particle-type filler, and may be disposed in the network structure of the polymer having the interpenetrating polymer network structure to enhance air permeability. In addition, the organic filler that is a vinylidene fluoride-based polymer can exhibit excellent adhesive strength.

The organic filler may have a D50 particle diameter of 50 nm to 1,000 nm. For example, within the above range, excellent air permeability may be imparted to the separator for a rechargeable lithium battery according to an embodiment.

Within the above range, as the D50 particle diameter of the organic filler increases, a thickness of the adhesive layer increases and the adhesive function may be rather deteriorated. Considering this trade-off relationship, the D50 particle diameter of the organic filler may be adjusted.

For example, the organic filler may have a D50 particle size of greater than or equal to 50 nm, greater than or equal to 100 nm, greater than or equal to 150 nm, or greater than or equal to 200 nm, and less than or equal to 1,000 nm, less than or equal to 800 nm, less than or equal to 600 nm, less than or equal to 400 nm, or less than or equal to 300 nm.

The organic filler may have a weight average molecular weight of greater than or equal to 100,000 g/mol. Within the above range, excellent air permeability may be imparted to the separator for a rechargeable lithium battery according to an embodiment.

For example, as the weight average molecular weight of the organic filler decreases within the above range, it may be electrochemically unstable. Considering this relationship, the weight average molecular weight of the organic filler may be adjusted. For example, the weight average molecular weight of the organic filler may be greater than or equal to 100,000 g/mol, greater than or equal to 200,000 g/mol, or greater than or equal to 300,000 g/mol.

Even if the weight average molecular weight of the organic filler is increased, the physical properties are not deteriorated, and the upper limit is not limited thereto, but may be 1,500,000 g / mol or less, which is the upper limit of the weight average molecular weight of commercially available organic fillers.

### Adhesive Layer

A weight ratio of the adhesive binder and the organic filler in the adhesive layer may be 5:95 to 85:15. Within this range, there is a synergistic effect in enhancing air permeability through the organic filler while exhibiting excellent adhesive strength due to the adhesive binder.

For example, as the content of the adhesive binder within the above range is relatively high, the air permeability of the separator may increase, thereby increasing the internal resistance of the battery, and as the content of the adhesive binder decreases, adhesive ability of the adhesive layer may decrease. Considering this trade-off relationship, the weight ratio of the adhesive binder and the organic filler may be adjusted.

For example, the weight ratio of the adhesive binder and the organic filler in the adhesive layer may be 5:95 to 85:15, 15:85 to 85:15, 20:80 to 80:20 (1:4 to 4:1).

A loading amount of the adhesive layer may be 0.1 g/m² to 1.0 g/m² per one surface of the substrate. Within this range, thermal stability, structural stability, etc. may be improved while exhibiting excellent adhesive strength.

For example, as the loading amount of the adhesive layer increases within the above range, the air permeability of the separator may increase and thus the internal resistance of the battery may increase, and as the loading amount of the adhesive layer decreases, adhesive ability of the adhesive layer may decrease. Considering this trade-off relationship, the loading amount of the adhesive layer may be adjusted.

For example, the loading amount of the adhesive layer is greater than or equal to 0.1 g/m², greater than or equal to 0.2 g/m², or greater than or equal to 0.3 g/m², and less than or equal to 1.0 g/m², less than or equal to 8.0 g/m², or less than or equal to 7.0 g/m² per one surface of the substrate.

### Ceram ic

The ceramic may be selected from boehmite, Al₂O₃, B₂O₃, Ga₂O₃, TiO₂, SnO₂, CeO₂, MgO, NiO, CaO, GaO, ZnO, ZrO₂, Y₂O₃, SrTiOs, BaTiOs, Mg(OH)₂, and a combination thereof.

The ceramic may have a D50 particle diameter of 1 nm to 2000 nm, for example, 100 nm to 1000 nm, or 100 nm to 700 nm. In addition, it is also possible to mix and use two or more types of ceramics having different particle sizes. If the D50 particle diameter of the ceramic is within the above range, it can be uniformly coated on the substrate when forming the heat resistant layer, can suppress short circuit between the positive electrode and the negative electrode, and also minimize a resistance of lithium ions to secure the performance of the rechargeable lithium battery.

### Heat Resistant Layer

The heat resistant layer may further include at least one binder for the heat resistant layer selected from polyvinylidene fluoride (PVdF), a styrene-butadiene rubber (SBR), carboxymethylcellulose (CMC), a polyvinylidene fluoride-hexafluoropropylene (PVdF-HFP) copolymer, ethylene vinyl acetate (EVA), hydroxyethyl cellulose (HEC), polyvinyl alcohol (PVA), polyvinyl butyral (PVB), an ethylene-acrylic acid copolymer, acrylonitrile, a vinyl acetate derivative, polyethylene glycol, and an acrylic rubber, for adhesion between the ceramic particles and adhesion between the ceramic particles and the substrate.

For example, the acrylic rubber may be a copolymer including repeating units derived from acrylamide and repeating units derived from 2-acrylamido-2-methylpropanesulfonic acid, but is not limited thereto.

A weight ratio of the ceramic and the binder in the heat resistant layer may be 50:1 to 10:1. Within the above range, an effect of heat resistance and durability of the ceramic may be sufficiently exhibited while securing adhesive strength between the ceramic particles and adhesive strength between the ceramic particles and the substrate.

For example, as the content of the binder within the above range is relatively high, the air permeability of the separator may increase, thereby increasing the internal resistance of the battery. As the content of the binder decreases, not only does the heat resistance of the heat resistant layer decrease, but the heat resistant layer may also be detached. Considering this trade-off relationship, the weight ratio of the ceramic and the binder in the heat resistant layer may be adjusted.

The heat resistance layer may have a thickness of 0.5 µm to 20 µm, for example, 1 µm to 10 µm or 1 µm to 5 µm. If the thickness of the heat resistant layer is within the above range, heat resistance is improved, suppressing internal short circuit of the battery, securing a stable separator, and suppressing an increase in internal resistance of the battery.

### Substrate

The substrate may include polyolefin, polyester, polytetrafluoroethylene (PTFE), polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylene naphthalene, a glass fiber, or a combination thereof, but is not limited thereto.

Examples of the polyolefin include polyethylene and polypropylene, and examples of the polyester include polyethylene terephthalate and polybutylene terephthalate.

In addition, the substrate may be a non-woven fabric or a porous substrate in the form of a woven fabric, and may have a single film or multi-layer structure. For example, the substrate may include a polyethylene single film, a polypropylene single film, a polyethylene/polypropylene double film, a polypropylene/polyethylene/polypropylene triple film, a polyethylene/polypropylene/polyethylene triple film, and the like.

The substrate may have a thickness of 1 to 40 µm, for example, 1 to 30 µm, 1 to 20 µm, 5 to 15 µm, or 5 to 10 µm. If the thickness of the substrate is within the above range, a short circuit between the positive electrode and the negative electrode can be prevented without increasing the internal resistance of the battery.

### Separator Structure

As mentioned above, the separator of an embodiment includes a substrate; and a heat resistance layer and an adhesive layer sequentially formed on 'at least one surface' of the substrate. The heat resistant layer may be disposed directly on the substrate. In addition or independent thereof, the adhesive layer may be directly disposed on the heat resistant layer.

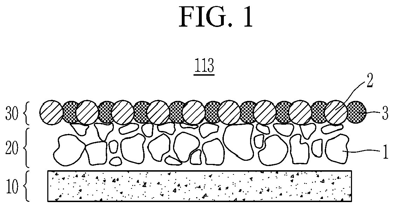

For example, the separator of an embodiment, as shown in FIG. 1, may include a substrate 10; and a heat resistant layer 20 and an adhesive layer 30 sequentially formed on the first surface of the substrate 10.

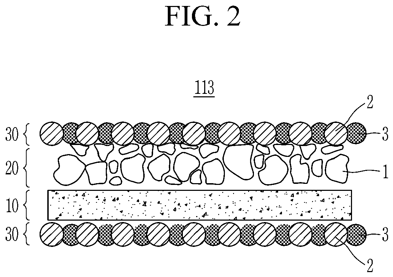

In addition, the separator for a rechargeable lithium battery, as shown in FIG. 2, may include the substrate 10; the heat resistant layer 20 and the adhesive layer 30 sequentially formed on the first surface of the substrate 10; and a second adhesive layer 30 formed on the second surface of the substrate 10.

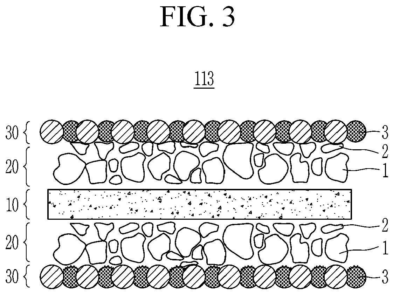

In addition, the separator for a rechargeable lithium battery, as shown in FIG. 3, may include the substrate 10; a second heat resistant layer 20 and a third adhesive layer 30 sequentially formed on the first surface of the substrate 10; and a third heat resistant layer 20 and a fourth adhesive layer 30 formed on the second surface of the substrate 10.

In the above three examples, the heat resistant layer and the first to third heat resistant layers respectively include a ceramic 1, the first to fourth adhesive layers respectively include an adhesive binder 2 and an organic filler 3, wherein the adhesive binder includes a polymer having an interpenetrating polymer network (IPN) structure.

As shown in FIG. 2, when the adhesive layer is formed on both surfaces of the substrate, while the heat resistant layer is formed on one surface of the substrate, and compared with, as shown in FIG. 1, when the heat resistant layer is formed on one surface of the substrate, while the adhesive layer is formed only on the surface where the heat resistant layer is formed, excellent adhesive strength may be secured with both of the positive and negative electrodes.

Furthermore, as shown in FIG. 3, when the adhesive layer is formed on both surfaces of the substrate, while the heat resistant layer is simultaneously formed on both surfaces of the substrate, compared with the cases shown in FIGS. 1 and 2, excellent adhesive strength with the positive and negative electrodes may not only be secured, but also heat resistance may be improved.

### (Rechargeable Lithium Battery)

Another embodiment provides a rechargeable lithium battery including the aforementioned separator for a rechargeable lithium battery of an embodiment.

The aforementioned separator for a rechargeable lithium battery of an embodiment exhibits excellent thermal stability, structural stability, adhesive strength, air permeability, etc., and contributes to the stable operation of a rechargeable lithium battery.

Hereinafter, the rechargeable lithium battery will be described in detail, except for overlapping descriptions with the foregoing.

FIG. 3 is an exploded perspective view of a rechargeable lithium battery according to an embodiment. Referring to FIG. 3, a rechargeable lithium battery 100 according to an embodiment includes a battery cell including a negative electrode 112, a positive electrode 114 facing the negative electrode 112, a separator 113 disposed between the negative electrode 112 and the positive electrode 114, and an electrolyte solution (not shown) immersed in the negative electrode 112, positive electrode 114 and separator 113, a battery case 120 housing the battery cell, and a sealing member 140 sealing the battery case 120.

### Positive Electrode

The positive electrode 114 includes a positive electrode current collector and a positive electrode active material layer formed on the positive electrode current collector. The positive electrode active material layer includes a positive electrode active material, a positive electrode binder, and optionally a conductive material.

The positive electrode current collector may use aluminum, nickel, and the like, but is not limited thereto.

The positive electrode active material may use a compound capable of intercalating and deintercalating lithium. For example, at least one of a composite oxide or a composite phosphate of a metal selected from cobalt, manganese, nickel, aluminum, iron, or a combination thereof and lithium may be used. For example, the positive electrode active material may be a lithium cobalt oxide, a lithium nickel oxide, a lithium manganese oxide, a lithium nickel cobalt manganese oxide, a lithium nickel cobalt aluminum oxide, a lithium iron phosphate, or a combination thereof.

The binder improves binding properties of positive electrode active material particles with one another and with a current collector, and specific examples may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto. These may be used alone or as a mixture of two or more.

The conductive material improves conductivity of an electrode and examples thereof may be natural graphite, artificial graphite, carbon black, a carbon fiber, a metal powder, a metal fiber, and the like, but are not limited thereto. These may be used alone or as a mixture of two or more. The metal powder and the metal fiber may use a metal of copper, nickel, aluminum, silver, and the like.

### Negative Electrode

The negative electrode 112 includes a negative electrode current collector and a negative electrode active material layer formed on the negative electrode current collector.

The negative electrode current collector may use copper, gold, nickel, a copper alloy, and the like, but is not limited thereto.

The negative electrode active material layer may include a negative electrode active material, a negative electrode binder, and optionally a conductive material. The negative electrode active material may be a material that reversibly intercalates/deintercalates lithium ions, a lithium metal, a lithium metal alloy, a material capable of doping and dedoping lithium, a transition metal oxide, or a combination thereof.

The material that reversibly intercalates/deintercalates lithium ions may be a carbon material which is any generally-used carbon-based negative electrode active material, and examples thereof may be crystalline carbon, amorphous carbon, or a combination thereof. Examples of the crystalline carbon may be graphite such as irregular, sheet-shape, flake, spherical shape or fiber-shaped natural graphite or artificial graphite. Examples of the amorphous carbon may be soft carbon or hard carbon, a mesophase pitch carbonized product, calcined coke, and the like. The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn. The material capable of doping and dedoping lithium may be Si, SiOₓ (0<x<2), a Si-C composite, a Si-Y alloy, Sn, SnO₂, a Sn-C composite, a Sn-Y alloy, and the like, and at least one of these may be mixed with SiO₂. Specific examples of the element Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The transition metal oxide may be vanadium oxide, lithium vanadium oxide, and the like.

The binder and the conductive material used in the negative electrode 112 may be the same as the binder and the conductive material of the aforementioned positive electrode 114.

The positive electrode 114 and the negative electrode 112 may be manufactured by mixing each active material composition including each active material and a binder, and optionally a conductive material in a solvent, and coating the active material composition on each current collector. Herein, the solvent may be N-methylpyrrolidone, and the like, but is not limited thereto. The electrode manufacturing method is well known, and thus is not described in detail in the present specification.

### Electrolyte Solution

The electrolyte solution includes an organic solvent a lithium salt.

The organic solvent serves as a medium for transmitting ions taking part in the electrochemical reaction of a battery. The organic solvent may be a carbonate-based solvent, an ester-based solvent, an ether-based solvent, a ketone-based solvent, an alcohol-based solvent, and an aprotic solvent. The carbonate-based solvent may be dimethyl carbonate, diethyl carbonate, dipropyl carbonate, methylpropyl carbonate, ethylpropyl carbonate, methylethyl carbonate, ethylene carbonate, propylene carbonate, butylene carbonate, and the like, and the ester-based solvent may be methyl acetate, ethyl acetate, n-propyl acetate, 1,1-dimethylethyl acetate, methylpropionate, ethylpropionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like, and the ketone-based solvent may be cyclohexanone, and the like. The alcohol-based solvent may be ethanol, isopropyl alcohol, and the like, and the aprotic solvent may be nitriles such as R-CN (R is a C2 to C20 linear, branched, or cyclic hydrocarbon group, a double bond, an aromatic ring, or an ether bond), and the like, amides such as dimethyl formamide, dioxolanes such as 1,3-dioxolane, sulfolanes, and the like.

The organic solvent may be used alone or in a mixture of two or more, and if the organic solvent is used in a mixture of two or more, the mixture ratio may be controlled in accordance with a desirable cell performance.

The lithium salt is dissolved in an organic solvent, supplies lithium ions in a battery, basically operates the rechargeable lithium battery, and improves lithium ion transportation between positive and negative electrodes therein. Examples of the lithium salt may include LiPF₆, LiBF₄, LiSbF₆, LiAsF₆, LiN(SO₃C₂F₅)₂, LiN(CF₃SO₂)₂, LiC₄F₉SO₃, LiClO₄, LiAlO₂, LiAlCl₄, LiN(CₓF₂ₓ₊₁SO₂)(C_{y}F_{2y+1}SO₂) (x and y are natural numbers), LiCl, Lil, LiB(C₂O₄)₂, or a combination thereof, but are not limited thereto.

The lithium salt may be used in a concentration ranging from 0.1 M to 2.0 M. If the lithium salt is included within the above concentration range, an electrolyte may have excellent performance and lithium ion mobility due to optimal conductivity and viscosity of the electrolyte solution.

Examples and comparative examples of the present invention are described below. The following examples are only examples of the present invention, but the present invention is not limited to the following examples.

### [Preparation Examples]

### Preparation Example 1: Preparation of Binder for Heat Resistant Layer (Acrylic Rubber)

In a 10 L four-necked flask equipped with an agitator, a thermometer, and a cooling tube, distilled water (6361 g), acrylic acid (72.06 g, 1.0 mol), acrylamide (604.1 g, 8.5 mol), potassium persulfate (2.7 g, 0.01 mol), 2-acrylamido-2-methylpropanesulfonic acid (103.6 g, 0.5 mol), and a 5N lithium hydroxide aqueous solution (1.05 equivalent based on the total amount of the 2-acrylamido-2-methylpropanesulfonic acid) were put. After reducing an internal pressure of the flask to 10 mmHg by using a diaphragm pump, the internal pressure of the flask was returned to a normal pressure by using nitrogen. This series of operations was three times repeated.

Subsequently, a reaction solution (reaction product) in the flask was reacted for 12 hours, while controlling its temperature to be stable within a range of 65 °C to 70 °C. Next, the reaction solution was cooled to room temperature and treated with a 25% ammonia aqueous solution to adjust pH into 7 to 8. Then, the reaction solution (reaction product) was taken by about 10 mL to measure a non-volatile component, which was 9.5% (theoretical value: 10%).

The non-volatile component was poly(acrylic acid-co-acrylamide-co-2-acrylamido-2-methylpropanesulfonic acid) sodium salt having an acrylic acid-derived repeating unit, an acrylamide-derived repeating unit, and a 2-acrylamido-2-methylpropanesulfonic acid-derived repeating unit in a mole ratio of 10:85:5, which was obtained as a binder (acrylic rubber) for a heat resistant layer.

### Preparation Example 2: Preparation of Composition for Heat Resistance Layer

Boehmite having a D50 particle diameter of 300 nm (manufacturer: NabalTec AG) was pulverized with a bead mill for 2 hours, and water was added thereto, preparing Boehmite dispersion (Boehmite content: 40 wt%).

The binder for a heat resistant layer according to Preparation Example 1 was mixed with the Boehmite dispersion to have 95 wt% of the Boehmite content in the mixed solution, and water was added thereto to adjust a total solid (the binder for a heat resistant layer and Boehmite) into 5 wt%, preparing a heat resistant layer composition. In the heat resistant layer composition, Boehmite and the binder for a heat resistant layer had a weight ratio of 30:1 based on the solid content.

### Preparation Example 3: Preparation of Composition for Adhesive Layer in Which Adhesive Binder having IPN Structure and Organic Filler in a Weight Ratio of 1:1

A polymer (product name: LBG4330LX, manufacturer: Arkema) including an acrylate-based crosslinked polymer and a vinylidene fluoride-based crosslinked polymer in a weight ratio of 3:7 and having a total weight average molecular weight of 500,000 g/mol was used as an adhesive binder having an IPN structure.

As for an organic filler, polyvinylidene fluoride particles (product name: Solef latex 2062, manufacturer: Solvay S.A.) having a D50 particle diameter of 250 nm and a weight average molecular weight of 500,000 g/mol were used.

Herein, the weight average molecular weights of the adhesive binder having an IPN structure and the organic filler were an average molecular weight in terms of polystyrene, which was measured by using gel permeation chromatography. Hereinafter, a weight average molecular weight mentioned below was measured in the same manner as above and thus will not be further mentioned.

The adhesive binder having an IPN structure and the organic filler were mixed in a weight ratio of 1:1, and polyvinyl alcohol (PVA, manufacturer: Sumitomo Corp.) was added thereto, preparing a composition for an adhesive layer. Herein, the polyvinyl alcohol was added in an amount of 2 wt% based on a total amount of the composition for an adhesive layer.

### Preparation Example 4: Preparation of Composition for Adhesive Layer in Which Adhesive Binder having IPN Structure and Organic Filler in a Weight Ratio of 2:1

A composition for an adhesive layer according to Preparation Example 4 was prepared in the same manner as in Preparation Example 3 except that the adhesive binder having an IPN structure and the organic filler were mixed in a weight ratio of 2:1.

### Preparation Example 5: Preparation of Composition for Adhesive Layer in Which Adhesive Binder having IPN Structure and Organic Filler in a Weight Ratio of 1:3

A composition for an adhesive layer according to Preparation Example 5 was prepared in the same manner as in Preparation Example 3 except that the adhesive binder having an IPN structure and the organic filler were mixed in a weight ratio of 1:3.

### Preparation Example 6: Preparation of Composition for Adhesive Layer in Which Adhesive Binder having IPN Structure and Organic Filler in a Weight Ratio of 3:1

A composition for an adhesive layer according to Preparation Example 6 was prepared in the same manner as in Preparation Example 3 except that the adhesive binder having an IPN structure and the organic filler were mixed in a weight ratio of 2:1.

### Preparation Example 7: Preparation of Composition for Adhesive Layer in Which Adhesive Binder having IPN Structure and Organic Filler in a Weight Ratio of 1:2

A composition for an adhesive layer according to Preparation Example 7 was prepared in the same manner as in Preparation Example 3 except that the adhesive binder having an IPN structure and the organic filler were mixed in a weight ratio of 1:2.

### Preparation Comparative Example 1: Preparation of Composition for Adhesive Layer in Which Adhesive Binder having a non-IPN structure and Organic Filler in a Weight Ratio of 1:1

Polyacrylate, a linear polymer having a weight average molecular weight of 500,000 g/mol, was prepared as an adhesive binder having a non-IPN structure.

A composition for an adhesive layer according to Preparation Comparative Example 1 was prepared in the same manner as in Preparation Example 3 except that the linear polymer, polyacrylate, was used.

### Preparation Comparative Example 2: Preparation of Composition for Adhesive Layer in Which Adhesive Binder having a non-IPN structure and Organic Filler in a Weight Ratio of 1:3

Polyacrylate, a linear polymer having a weight average molecular weight of 500,000 g/mol, was prepared as an adhesive binder having a non-IPN structure,.

A composition for an adhesive layer according to Preparation Comparative Example 2 was prepared in the same manner as in Preparation Example 5 except that the linear polymer, polyacrylate, was used.

### Preparation Comparative Example 3: Preparation of Composition for Adhesive Layer in Which Adhesive Binder having a non-IPN structure and Organic Filler in a Weight Ratio of 1:1

A PVdF-HFP (poly vinylidene fluoride-co-hexafluoropropylene) copolymer, a linear polymer having a weight average molecular weight of 500,000 g/mol, was prepared as an adhesive binder having a non-IPN structure.

A composition for an adhesive layer according to Preparation Comparative Example 3 was prepared in the same manner as in Preparation Example 3 except that the linear polymer, PVdF-HFP, was used.

### Preparation Comparative Example 4: Preparation of Composition for Adhesive Layer in Which Adhesive Binder having a non-IPN structure and Organic Filler in a Weight Ratio of 1:3

A PVdF-HFP (poly vinylidene fluoride-co-hexafluoropropylene) copolymer, a linear polymer having a weight average molecular weight of 500,000 g/mol, was prepared as an adhesive binder having a non-IPN structure.

A composition for an adhesive layer according to Preparation Comparative Example 4 was prepared in the same manner as in Preparation Example 5 except that the linear polymer, PVdF-HFP, was used.

### Preparation Comparative Example 5: Preparation of Composition for Adhesive Layer including Adhesive Binder having a non-IPN structure

A vinylidene fluoride-acryl copolymer having a weight average molecular weight of about 1,100,000 g/mol and including acrylic acid (AA) within 1 wt% (product name: Solef5130, manufacturer: Solvay S.A.)) was prepared as an adhesive binder having a non-IPN structure.

A composition for an adhesive layer according to Preparation Comparative Example 5 was prepared in the same manner as in Preparation Example 5 except that the vinylidene fluoride-acryl copolymer was used.

### [Examples]

### Example 1

The composition for a heat resistant layer according to Preparation Example 2 was coated on the first surface of a 5.5 µm-thick polyethylene single film substrate in a Gravure coating method. The coated substrate was dried at 70 °C and a wind speed of 15 m/sec for 10 seconds, obtaining the substrate coated with a 2 µm-thick heat resistant layer on one side.

The composition for an adhesive layer according to Preparation Example 3 was coated on the heat resistant layer only on the first surface of the substrate single-side coated with the heat resistant layer in the Gravure coating method, and on the second surface, the composition for an adhesive layer according to Preparation Example 3 was also coated in the Gravure coating method.

Subsequently, the coated substrate was dried at 70 °C and a wind speed of 15 m/sec for 10 seconds, obtaining a separator having a structure of [adhesive layer/substrate/heat resistant layer/adhesive layer] shown in FIG. 2. Herein, a loading amount of the adhesive layer disposed on both surfaces of the substrate was 0.5 g/m² on each surface and 1.0 g/m² in total on both surfaces.

### Example 2

A separator and a rechargeable lithium battery cell according to Example 2 were manufactured in the same manner as in Example 1 except that the composition for an adhesive layer of Preparation Example 4 was used instead of the composition for an adhesive layer of Preparation Example 3.

### Example 3

A separator and a rechargeable lithium battery cell according to Example 3 were manufactured in the same manner as in Example 1 except that the composition for an adhesive layer of Preparation Example 5 was used instead of the composition for an adhesive layer of Preparation Example 3.

### Example 4

A separator and a rechargeable lithium battery cell according to Example 4 were manufactured in the same manner as in Example 1 except that the composition for an adhesive layer of Preparation Example 6 was used instead of the composition for an adhesive layer of Preparation Example 3.

### Example 5

A separator and a rechargeable lithium battery cell according to Example 5 were manufactured in the same manner as in Example 1 except that the composition for an adhesive layer of Preparation Example 7 was used instead of the composition for an adhesive layer of Preparation Example 3.

### [Comparative Examples]

### Comparative Example 1

A separator and a rechargeable lithium battery cell according to Comparative Example 1 were manufactured in the same manner as in Example 1 except that the composition for an adhesive layer of Preparation Comparative Example 1 was used instead of the composition for an adhesive layer of Preparation Example 3.

### Comparative Example 2

A separator and a rechargeable lithium battery cell according to Comparative Example 2 were manufactured in the same manner as in Example 1 except that the composition for an adhesive layer of Preparation Comparative Example 2 was used instead of the composition for an adhesive layer of Preparation Example 3.

### Comparative Example 3

A separator and a rechargeable lithium battery cell according to Comparative Example 3 were manufactured in the same manner as in Example 1 except that the composition for an adhesive layer of Preparation Comparative Example 3 was used instead of the composition for an adhesive layer of Preparation Example 3.

### Comparative Example 4

A separator and a rechargeable lithium battery cell according to Comparative Example 4 were manufactured in the same manner as in Example 1 except that the composition for an adhesive layer of Preparation Comparative Example 4 was used instead of the composition for an adhesive layer of Preparation Example 3.

### Comparative Example 5

A substrate was coated with an adhesive layer on both sides without forming the heat resistant layer on one side. A separator and a rechargeable lithium battery cell according to Comparative Example 5 were manufactured in the same manner as in Example 1 except for the above.

### Comparative Example 6

A separator and a rechargeable lithium battery cell according to Comparative Example 6 were manufactured in the same manner as in Example 1 except that the composition for an adhesive layer of Preparation Comparative Example 5 was used instead of the composition for an adhesive layer of Preparation Example 3.

### [Evaluation Examples]

### Evaluation Example 1: Evaluation of Separator

### (1) Air permeability Immediately after Manufacturing Separator

Each of the separators for a rechargeable lithium battery of the examples and the comparative examples was measured with respect to air permeability immediately after the manufacturing.

For example, immediately after manufacturing each of the above separators, air permeability, the separators were treated as samples for measuring air permeability. An air permeability meter (Model: EG01-55-1MR, Maker: Asahi Seiko Co., Ltd.) was used to measure time (sec) required for 100 cc of air to pass through each of the samples for measuring air permeability under a constant pressure of (0.05 MPa). After measuring the time at each 1 point of left/middle/right of the sample, 3 points in total, an average thereof was recorded in Table 1.

### (2) Thermal Shrinkage Rate

Each of the separators for a rechargeable lithium battery according to the examples and the comparative examples was cut into a size of 10 cm × 10 cm, preparing a sample for measuring thermal shrinkage rate. After drawing a 5 cm × 5 cm quadrangle on the surface of the sample for measuring thermal shrinkage, the sample was inserted between papers or alumina powders, left in an oven at 150 °C for 1 hour, and taken out therefrom to measure sides of the quadrangle and calculate each shrinkage in a horizontal direction (MD) and a vertical direction (TD), and the results are shown in Table 1.

### (3) Electrode Adhesive Strength

LiCoO₂, polyvinylidene fluoride, and carbon black in a weight ratio of 96:2:2 were added to an N-methylpyrrolidone solvent, preparing slurry. The slurry was coated on an aluminum thin film and then, dried and rolled, manufacturing a positive electrode.

In addition, graphite, CMC, SBR, and carbon black in a weight ratio of 97:1:1.5:0.5 were added to DIW, preparing slurry. The slurry was coated on a copper foil and then, dried and rolled, manufacturing a negative electrode.

Each of the separators for a rechargeable lithium battery according to the examples and the comparative examples was cut into a width of 25 mm and a length of 80 mm, and a polyethylene non-woven fabric was also cut into the same size. The positive electrode was cut into a width of 30 mm and a length of 80 mm and disposed on one side of each of the separators, while on the other side thereof, the polyethylene non-woven fabric and the positive electrode were disposed, manufacturing a unit cell. The unit cell was provided with an electrolyte solution. The electrolyte solution was prepared by dissolving 1 M LiBF₄ in propylenecarbonate (PC).

The corresponding unit cell was experimented with respect to adhesion at about 80 °C for 1 hour under 300 kgf/cm. Subsequently, the unit cell was disassembled to separate the separator about 10 to 20 mm apart from a negative electrode plate, and after fixing the separator into an upper grip and the negative electrode plate into a lower grip with a grip interval of 20 mm, the separator was pulled and peeled from the negative electrode plate in a 180 ° direction. The peeling was performed at 20 mm/min, and after three times measuring a force required to peel the separator 40 mm from the peeling start, an average thereof was calculated. The results are shown in Table 1.

The negative electrodes were measured with respect to adhesive strength in the same manner as above, and the results are shown in Table 1.

### (4) Air permeability in the Presence of Electrolyte Solution after Heat Press

Each separator for a rechargeable lithium battery according to the examples and the comparative examples was cut into a size of 5 cm X 5 cm, and a polyethylene non-woven fabric, an aluminum substrate, and a positive electrode were also cut into the same size. On both sides of the separator, the polyethylene non-woven fabrics were arranged to manufacture a unit cell, and the unit cell was measured with respect to air permeability. Each unit cell was manufactured by three in total.
(b) Each unit cell, of which the air permeability was measured according to the (a), the aluminum substrate and the positive electrode were arranged on both sides and then, provided with an electrolyte solution. The electrolyte solution was prepared by dissolving 1 M LiBF4 in propylene carbonate (PC). The corresponding cell was experimented with respect to adhesion at about 80 °C for 1 hour under 300 kgf/cm. Subsequently, the cell was disassembled to remove the aluminum substrate and the positive electrode, washed with dimethylcarbonate (DMC) for 20 seconds to remove the lithium salt, and after drying the solvent, measured with respect to air permeability.

An air permeability meter (Model: EG01-55-1MR, Maker: Asahi Seiko Co., Ltd.) was used to measure time (sec) required for 100 cc of air to pass each of the samples for measuring air permeability under a constant pressure (0.05 MPa). The air permeability of the three-unit cells were averaged to obtain a change before/after the heat press, and the results are shown in Table1.
(air permeability (b) after bonding - air permeability (a) after bonding)

**(Table 1)**

| | Separator immediately after manufacturing | | Separator under electrolyte solution after heat press | | |
|---|---|---|---|---|---|
| | Air permeab ility (sec/100 cc) | Heat shrinkage rate @ 150°C, 1hr (MD/TD)% | Electrode adhesive strength (gf/mm) | | Air permea bility (sec/10 0cc) |
| | | | positive electrode | negative electrode | |
| Example 1 | 40 | ≤ 5 | 0.45 | 0.33 | 50 |
| Example 2 | 50 | ≤ 5 | 0.75 | 0.64 | 81 |
| Example 3 | 32 | ≤ 5 | 0.30 | 0.23 | 25 |
| Example 4 | 55 | ≤ 5 | 0.93 | 1.00 | 90 |
| Example 5 | 38 | ≤ 5 | 0.40 | 0.28 | 40 |
| Comparative Example 1 | 65 | ≤ 5 | 1.02 | 1.10 | 200 |
| Comparative Example 2 | 50 | ≤ 5 | 0.60 | 0.80 | 100 |
| Comparative Example 3 | 40 | ≤ 5 | 0.65 | <0.10 | 50 |
| Comparative Example 4 | 30 | ≤ 5 | 0.27 | <0.10 | 24 |
| Comparative Example 5 | 35 | > 50 | 0.35 | 0.31 | 45 |
| Comparative Example 6 | 30 | ≤ 5 | 0.44 | <0.10 | 35 |

Referring to Table 1, the separators of the examples did not only exhibit air permeability immediately after the manufacturing within an appropriate range and as well as a low thermal shrinkage but also maintained high electrode adhesive strength after the heat press under an electrolyte solution and high air permeability within an appropriate range. For example, the separators of the comparative examples, in which a heat resistant layer and an adhesive layer were sequentially formed on the first surface of a substrate, exhibited at least one deteriorated characteristic among the aforementioned characteristics as a result of applying an adhesive binder having a non-IPN structure to the adhesive layer.

For example, the separators of Comparative Examples 1 and 2, in which polyacrylate having a linear structure as an adhesive binder with a non-IPN structure was applied to the adhesive layer, compared with the separators of Examples 1 and 3 in which an adhesive binder with an IPN structure in the same amount was applied, exhibited significantly deteriorated air permeability after the heat press under an electrolyte solution as well as low air permeability immediately after the manufacturing.

On the other hand, the separators of Comparative Examples 3 and 4, in which PVdF-HFP with a linear structure was applied as an adhesive binder with a non-IPN structure, compared with the separators of Examples 1 and 3, in which an adhesive binder with an IPN structure in the same amount was applied, exhibited significantly deteriorated adhesive strength with a negative electrode under an electrolyte solution after the heat press.

Furthermore, the separator of Comparative Example 5, in which the same adhesive layer as Example 1 was formed without a heat resistant layer, compared with the separator of Example 1, exhibited significantly deteriorated heat resistance.

Accordingly, a heat resistant layer including a ceramic was formed on a substrate of a separator to secure thermal stability and structure stability, and an adhesive layer including an adhesive binder with an IPN structure was formed thereon to secure adhesive strength with both electrodes (particularly, negative electrode), wherein an organic filler as an additional component of the adhesive layer was important to use to secure appropriate air permeability after the heat press.

### <Description of Symbols>

1: ceramic
2: adhesive binder
3: organic filler
10: substrate
20: heat resistant layer, first to third heat resistant layers
30: adhesive layer, first to fourth adhesive layers
100: rechargeable lithium battery
112: negative electrode
113: separator
114: positive electrode
120: battery case
140: sealing member

## Claims

1. A separator (113) for a rechargeable lithium battery (100), comprising
a heat resistant layer (20) and an adhesive layer (30) are sequentially formed on at least one surface of a substrate (10),
wherein the heat resistant layer (20) includes a ceramic (1),
the adhesive layer (30) includes an adhesive binder (2) and an organic filler (3), and
the adhesive binder (2) includes a polymer having an interpenetrating polymer network (IPN) structure.

2. The separator for a rechargeable lithium battery of claim 1, wherein
the adhesive binder (2) is one in which an acrylate-based crosslinked polymer and a vinylidene fluoride-based crosslinked polymer form an interpenetrating polymer network.

3. The separator for a rechargeable lithium battery of claim 2, wherein
a weight ratio of the acrylate-based crosslinked polymer and the vinylidene fluoride-based crosslinked polymer in the adhesive binder is 8:2 to 1:9.

4. The separator for a rechargeable lithium battery of any one of the preceding claims, wherein
the adhesive binder (2) has a weight average molecular weight of greater than or equal to 100,000 g/mol, wherein the average molecular weight is in terms of polystyrene measured using gel permeation chromatography.

5. The separator for a rechargeable lithium battery of any one of the preceding claims, wherein
the organic filler (3) is a material with a high melting point (Tm) of 100 to 200 °C; and/or
the organic filler (3) is a particle-type filler including a vinylidene fluoride-based polymer; and/or
the organic filler (3) has a D50 particle diameter of 50 nm to 1,000 nm measured by laser diffraction (LD); and/or
the organic filler (3) has a weight average molecular weight of greater than or equal to 100,000 g/mol, wherein the average molecular weight is in terms of polystyrene measured using gel permeation chromatography.

6. The separator for a rechargeable lithium battery of any one of the preceding claims, wherein
a weight ratio of the adhesive binder (2) and the organic filler (3) in the adhesive layer is 5:95 to 85:15.

7. The separator for a rechargeable lithium battery of any one of the preceding claims, wherein
a loading amount of the adhesive layer (30) is 0.1 g/m² to 1.0 g/m² per one surface of the substrate (10).

8. The separator for a rechargeable lithium battery of any one of the preceding claims, wherein
the ceramic (1) is selected from boehmite, Al₂O₃, B₂O₃, Ga₂O₃, TiO₂, SnO₂, CeO₂, MgO, NiO, CaO, GaO, ZnO, ZrO₂, Y₂O₃, SrTiOs, BaTiOs, Mg(OH)₂, and a combination thereof; and/or
the ceramic (1) has a D50 particle diameter of 1 nm to 2000 nm measured by laser diffraction (LD).

9. The separator for a rechargeable lithium battery of any one of the preceding claims, wherein
the heat resistant layer (20) further includes at least one binder selected from polyvinylidene fluoride (PVdF), a styrene-butadiene rubber (SBR), carboxymethylcellulose (CMC), a polyvinylidene fluoride-hexafluoropropylene (PVdF-HFP) copolymer, ethylene vinyl acetate (EVA), hydroxyethyl cellulose (HEC), polyvinyl alcohol (PVA), polyvinyl butyral (PVB), an ethylene-acrylic acid copolymer, acrylonitrile, a vinyl acetate derivative, polyethylene glycol, and an acrylic rubber.

10. The separator for a rechargeable lithium battery of claim 9, wherein
a weight ratio of the ceramic (1) and the binder in the heat resistant layer (20) is 50:1 to 10:1.

11. The separator for a rechargeable lithium battery of any one of the preceding claims, wherein
the heat resistant layer (20) has a thickness of 0.5 µm to 20 µm.

12. The separator for a rechargeable lithium battery of any one of the preceding claims, wherein
the substrate (10) includes polyolefin, polyester, polytetrafluoroethylene (PTFE), polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylene naphthalene, a glass fiber, or a combination thereof.

13. The separator for a rechargeable lithium battery of any one of the preceding claims, wherein
the substrate (10) has a thickness of 1 to 40 µm.

14. The separator for a rechargeable lithium battery of any one of the preceding claims, wherein
the separator (113) for a rechargeable lithium battery (100) includes:
a first heat resistant layer (20) and a first adhesive layer (30) sequentially formed on a first surface of the substrate (10); and a second adhesive layer (30) formed on a second surface of the substrate (10), or
a second heat resistant layer (20) and a third adhesive layer (30) sequentially formed on the first surface of the substrate (10); and a third heat resistant layer (20) and a fourth adhesive layer (30) sequentially formed on the second surface of the substrate (10),
wherein the first to third heat resistant layer (20) respectively include the ceramic (1),
the first to fourth adhesive layer (30) respectively include the adhesive binder (2) and the organic filler (3).

15. A rechargeable lithium battery comprising the separator (113) for a rechargeable lithium battery (100) of any one of the preceding claims.
